# EUROPEAN PATENT SPECIFICATION

(11) **EP 4 655 879 B1**
(45) Date of publication and mention of the grant of the patent: **28.10.2026**
(21) Application number: 23702332.0
(22) Date of filing: 26.01.2023
(51) Int. Cl.: H04B 7/0452, H04B 7/06

(54) **EXCLUSIVE BEAM PAIRING FOR MULTI-USER MULTIPLE INPUT MULTIPLE OUTPUT (MU-MIMO)**
EXKLUSIVE STRAHLPAARUNG FÜR MEHRBENUTZER-MIMO
APPARIEMENT DE FAISCEAU EXCLUSIF POUR ENTRÉES MULTIPLES SORTIES MULTIPLES MULTIUTILISATEURS (MU-MIMO)

(43) Date of publication of application: 03.12.2025
(73) Proprietor: Telefonaktiebolaget LM Ericsson (publ), 164 83 Stockholm (SE)
(72) Inventor: PERSSON, Jimmy, 224 72 Lund (SE)
(74) Representative: Ericsson
(86) International application number: PCT/EP2023/051944
(87) International publication number: WO 2024/156356

(56) References cited:
- US-A1- 2021 360 649
- US-A1- 2021 376 889

## Description

### TECHNICAL FIELD

The present disclosure relates to wireless communications, and in particular, to exclusive beam pairing for multi-user multiple input multiple output (MU-MIMO).

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs. The 3GPP is also developing standards for Sixth Generation (6G) wireless communication networks.

For downlink (DL) reciprocity-based MU-MIMO, WDs are co-scheduled in the same frequency and time. Sounding reference signal (SRS) channel estimates are used to calculate weights, that are used to "beamform", i.e. separate data to different WDs spatially.

When deciding which WDs to pair for co-scheduling, WDs that will interfere with each other too much should not be paired. There should be enough spatial separation for the beamforming to work.

Existing and previously considered solutions include:
- Calculating the correlation between the SRS channel estimates for the ports on different WDs, with a threshold for maximum allowed correlation;
- Using the precoder matrix indicator (PMI) reported by the WD for codebook based beamforming, to estimate the distance between the WDs, and a threshold for minimum allowed distance;
- Using a direction of arrival, e.g., based on channel estimates derived from SRS, to determine how close the WDs are to each other; and
- Random pairing, meaning nothing is done to check if the co-scheduling of WDs is appropriate.

These may be either pre-calculated or performed as needed.

Correlation based solutions are generally too time-consuming. They also do not take into account the impact of the weight calculation algorithm, which may reduce correlation depending on the situation.

Distance based solutions are usually faster, but only look at the "main" direction.

US 2021/360649 A1 discloses a transmit/receive point (TRP) selecting two UEs that have potential for MU-MIMO transmission, and the TRP then measuring signal and interference for each panel in both UEs based on UL beam management for a set of one or more candidate TRP beams. Based on the measurements, the TRP determines if multi-user transmission (i.e., co-scheduling of the two UEs) is possible.

### SUMMARY

Some embodiments advantageously provide methods and network nodes for exclusive beam pairing for multi-user multiple input multiple output (MU-MIMO).

In some embodiments, the SRS channel estimates are quantized into a bitmap, containing which directions contain a significant amount of power, and are therefore considered useful. These bitmaps are then used to ensure that each WD of the WDs co-scheduled in a slot, has at least 1 significant beam to itself, that doesn't overlap with any significant beam for any of the other WDs scheduled in that slot.

Using information derived from SRS channel estimates, some embodiments, ensure that for each WD scheduled, the WD has least one beam of significant power that may be formed by the base station that does not significantly interfere with, and is not significantly interfered by, any of the other co-scheduled WDs.

The calculations to be performed at the time of pairing are very fast compared to most other solutions. Because the calculations rely on bitmaps, memory requirements are reduced.

Some embodiments mimic the results of the weight calculation algorithm, looking at differences rather than similarities. This should result in better performance by more accurately excluding or including WDs to be co-scheduled.

Simulations shows performance improvements in most cases.

According to one aspect, a method in a network node configured to communicate with a plurality of wireless devices, WDs, is provided. The method includes for each of a plurality of beams received from a first WD, setting a bit of a per-port bitmap of the first WD to a logical true value when a signal power of a beam received by a port of the first WD exceeds a power threshold The method also includes performing a logical OR operation of per-port bitmaps of the first WD to determine a per-WD bitmap. The method also includes when a number of bits in the per-WD bitmap of the first WD having a logical true value exceeds a first bit threshold, adding the first WD to a preexisting set of WDs determined to be compatible for co-scheduling to form a set of WDs to be co-scheduled. The method also includes co-scheduling at least a subset of WDs of the set of WDs determined to be compatible for co-scheduling.

According to this aspect, in some embodiments, the method includes when the preexisting set of WDs is not empty and when a number of bits in the per-WD bitmap of the first WD set to a logical true value does not exceed a second bit threshold, then: tentatively adding the first WD to the preexisting set of WDs to form a tentative set of WDs to be co-scheduled; for each WD in the tentative set of WDs, including the tentatively added first WD, determining a logical AND operation of a per-WD bitmap of one WD in the tentative set of WDs with a logical complement of each per-WD bitmap of each remaining WD in the tentative set of WDs; when each logical AND operation results in a value greater than zero, confirming addition of the first WD to the preexisting set of WDs to form the set of WDs to be co-scheduled; and when at least one of the logical AND operations does not result in a value greater than zero, excluding the first WD from the set of WDs to be co-scheduled. In some embodiments, the first WD has multiple ports and the first power threshold is determined based at least in part on a total signal power of a plurality of beams across the multiple ports of the first WD. In some embodiments, a number of ports of the first WD is based at least in part on a rank indicator. In some embodiments, the power threshold is determined based at least in part on scaling the total signal power. In some embodiments, the method also includes determining a set of N most powerful beams received by the first WD, N being an integer greater than 1; and setting bits of the per-WD bitmap of the first WD that correspond to the N most powerful beams. In some embodiments, the method also includes resetting any remaining bits of the per-WD bitmap to a logical false value. In some embodiments, the first WD is selected based at least in part on a priority among a plurality of WDs. In some embodiments, once the first WD is excluded from the set of WDs to be co-scheduled, the first WD is not subsequently tentatively added to the set of WDs to be co-scheduled. In some embodiments, the first WD has multiple ports and the power threshold is determined based at least in part on a power of a beam with strongest power among a plurality of beams associated with ports of the first WD. In some embodiments, each of the plurality of beams is associated with a different sounding reference signal, SRS, channel estimate and the power of a beam corresponding to a bit is based at least in part on a corresponding SRS channel estimate. In some embodiments, the method includes operating a multi-user multiple input multiple output, MU-MIMO communications protocol.

According to another aspect, a network node configured to communicate with a plurality of wireless devices, WDs, is provided. The network node includes processing circuitry configured to, for each of a plurality of beams received from a first WD, set a bit of a per-port bitmap of the first WD to a logical true value when a signal power of a beam received by a port of the first WD exceeds a power threshold. The processing circuitry is also configured to perform a logical OR operation of per-port bitmaps of the first WD (22) to determine a per-WD bitmap. The processing circuitry is further configured to, when a number of bits in the per-WD bitmap of the first WD having a logical true value exceeds a bit threshold, add the first WD to a preexisting set of WDs determined to be compatible for co-scheduling to form a set of WDs to be co-scheduled. The processing circuitry is further configured to co-schedule at least a subset of WDs of the set of WDs determined to be compatible for co-scheduling.

According to this aspect, in some embodiments, the processing circuitry is further configured to: when the preexisting set of WDs is not empty and when a number of bits in the per-WD bitmap of the first WD set to a logical true value does not exceed the bit threshold, then: tentatively add the first WD to the preexisting set of WDs to form a tentative set of WDs to be co-scheduled; for each WD in the tentative set of WDs having a number of bits in its per-WD bitmap set to a logical true value that does not exceed the second bit threshold, including the tentatively added first WD, determining a logical AND operation of a per-WD bitmap of that WD with a logical complement of each per-WD bitmap of each other WD in the tentative set of WDs having a number of bits in its per-WD bitmap set to a logical true value that does not exceed the second bit threshold;
when each logical AND operation results in a value greater than zero, confirm addition of the first WD to the preexisting set of WDs to form the set of WDs to be co-scheduled; and when at least one of the logical AND operations does not result in a value greater than zero, exclude the first WD from the set of WDs to be co-scheduled. In some embodiments, the first WD has multiple ports and the power threshold is determined based at least in part on a total signal power of a plurality of beams across the multiple ports of the first WD. In some embodiments, a number of ports of the first WD is based at least in part on a rank indicator. In some embodiments, the power threshold is determined based at least in part on scaling the total signal power. In some embodiments, the processing circuitry is further configured to: determine a set of N most powerful beams received by the first WD, N being an integer greater than 1; and set bits of the per-WD bitmap of the first WD that correspond to the N most powerful beams. In some embodiments, the processing circuitry is further configured to reset any remaining bits of the per-WD bitmap not included in the set of N most powerful beams to a logical false value. In some embodiments, the first WD is selected based at least in part on a priority among a plurality of WDs. In some embodiments, once the first WD is excluded from the set of WDs to be co-scheduled, the first WD is not subsequently tentatively added to the set of WDs to be co-scheduled. In some embodiments, the first WD has multiple ports and the power threshold is determined based at least in part on a power of a beam with strongest power among a plurality of beams associated with ports of the first WD. In some embodiments, each of the plurality of beams is associated with a different sounding reference signal, SRS, channel estimate and the power of a beam corresponding to a bit is based at least in part on a corresponding SRS channel estimate. In some embodiments, the network node is configured to operate a multi-user multiple input multiple output, MU-MIMO communications protocol.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a schematic diagram of an example network architecture illustrating a communication system connected via an intermediate network to a host computer according to the principles in the present disclosure;
FIG. 2 is a block diagram of a host computer communicating via a network node with a wireless device over an at least partially wireless connection according to some embodiments of the present disclosure;
FIG. 3 is a flowchart illustrating example methods implemented in a communication system including a host computer, a network node and a wireless device for executing a client application at a wireless device according to some embodiments of the present disclosure;
FIG. 4 is a flowchart illustrating example methods implemented in a communication system including a host computer, a network node and a wireless device for receiving user data at a wireless device according to some embodiments of the present disclosure;
FIG. 5 is a flowchart illustrating example methods implemented in a communication system including a host computer, a network node and a wireless device for receiving user data from the wireless device at a host computer according to some embodiments of the present disclosure;
FIG. 6 is a flowchart illustrating example methods implemented in a communication system including a host computer, a network node and a wireless device for receiving user data at a host computer according to some embodiments of the present disclosure;
FIG. 7 is a flowchart of an example process in a network node for exclusive beam pairing for multi-user multiple input multiple output (MU-MIMO);
FIG. 8 is a flow diagram of an example process for co-scheduling wireless devices (WDs) according to principles set forth herein;
FIG. 9 is a flow diagram of an example process for creating a per-WD bitmap based according to principles set forth herein;
FIG. 10 is a flow diagram of an example process for pairing WDs based on a determination of compatibility for co-scheduling according to principles set forth herein;
FIG. 11 is a flow diagram of an example process for pairing a second WD with a first WD according to principles disclosed herein; and
FIG. 12 is a flow diagram of an example process for pairing a sixth WD to a group of previously paired WDs.

### DETAILED DESCRIPTION

Before describing in detail example embodiments, it is noted that the embodiments reside primarily in combinations of apparatus components and processing steps related to exclusive beam pairing for multi-user multiple input multiple output (MU-MIMO). Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein may be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) or a radio network node.

In some embodiments, the non-limiting terms wireless device (WD) or a user equipment (UE) are used interchangeably. The WD herein may be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It may be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, may be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide exclusive beam pairing for multi-user multiple input multiple output (MU-MIMO).

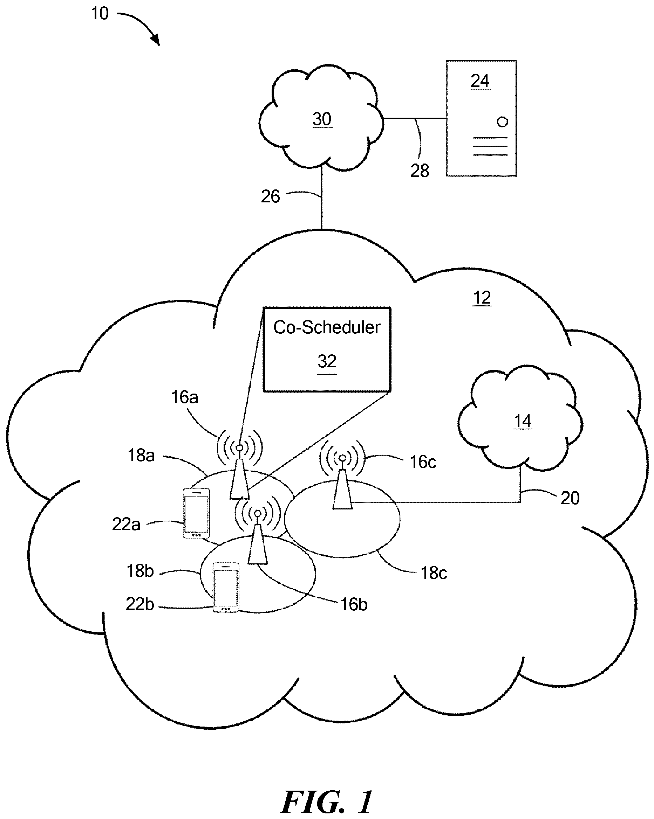

Referring now to the drawing figures, in which like elements are referred to by like reference numerals, there is shown in FIG. 1 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 may be in simultaneous communication and/or configured to separately communicate with more than one network node 16 and more than one type of network node 16. For example, a WD 22 may have dual connectivity with a network node 16 that supports LTE and the same or a different network node 16 that supports NR. As an example, WD 22 may be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 1 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a co-scheduler unit 32 which is configured to: when a number of bits in a per-WD bitmap of a WD having a logical true value exceeds a bit threshold, add the WD to a preexisting set of WDs determined to be compatible for co-scheduling to form a set of WDs to be co-scheduled.

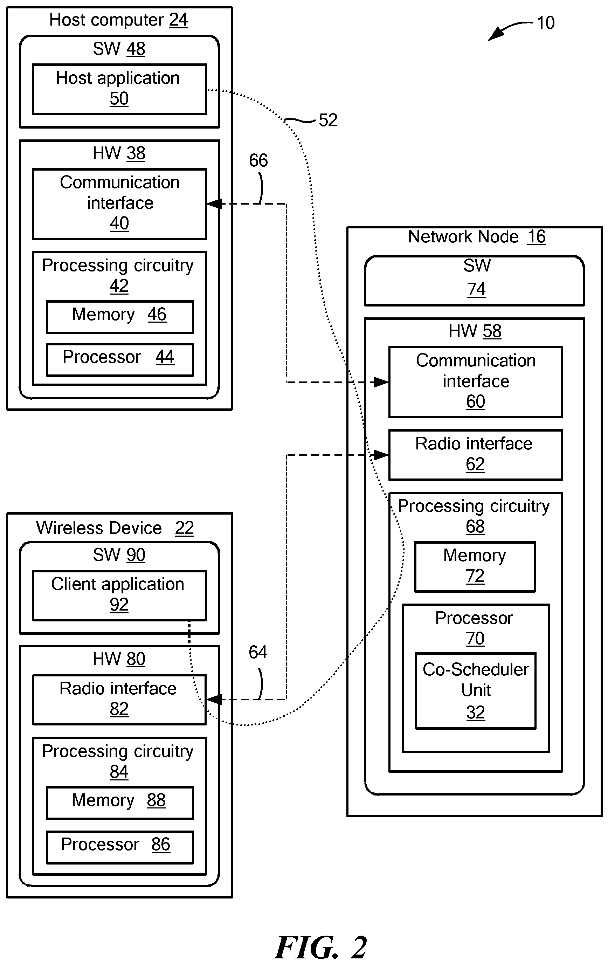

Example implementations, in accordance with an embodiment, of the WD 22, network node 16 and host computer 24 discussed in the preceding paragraphs will now be described with reference to FIG. 2. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include a co-scheduler unit 32 which is configured to: when a number of bits in a per-WD bitmap of a WD having a logical true value exceeds a bit threshold, add the WD to a preexisting set of WDs determined to be compatible for co-scheduling to form a set of WDs to be co-scheduled.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22.

In some embodiments, the inner workings of the network node 16, WD 22, and host computer 24 may be as shown in FIG. 2 and independently, the surrounding network topology may be that of FIG. 1.

In FIG. 2, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors, etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/ supporting/ending a transmission to the WD 22, and/or preparing/terminating/ maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/ supporting/ending a transmission to the network node 16, and/or preparing/ terminating/maintaining/supporting/ending in receipt of a transmission from the network node 16.

Although FIGS. 1 and 2 show various "units" such as co-scheduler unit 32 as being within a respective processor, it is contemplated that these units may be implemented such that a portion of the unit is stored in a corresponding memory within the processing circuitry. In other words, the units may be implemented in hardware or in a combination of hardware and software within the processing circuitry.

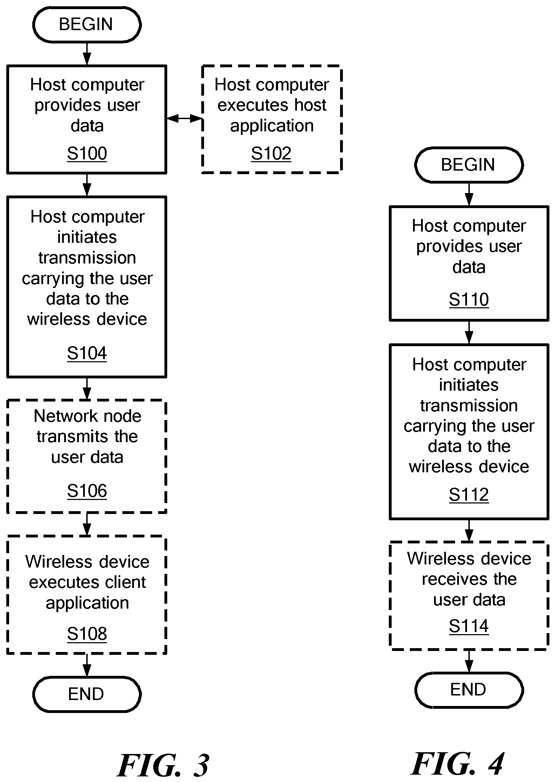

FIG. 3 is a flowchart illustrating an example method implemented in a communication system, such as, for example, the communication system of FIGS. 1 and 2, in accordance with one embodiment. The communication system may include a host computer 24, a network node 16 and a WD 22, which may be those described with reference to FIG. 2. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 4 is a flowchart illustrating an example method implemented in a communication system, such as, for example, the communication system of FIG. 1, in accordance with one embodiment. The communication system may include a host computer 24, a network node 16 and a WD 22, which may be those described with reference to FIGS. 1 and 2. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

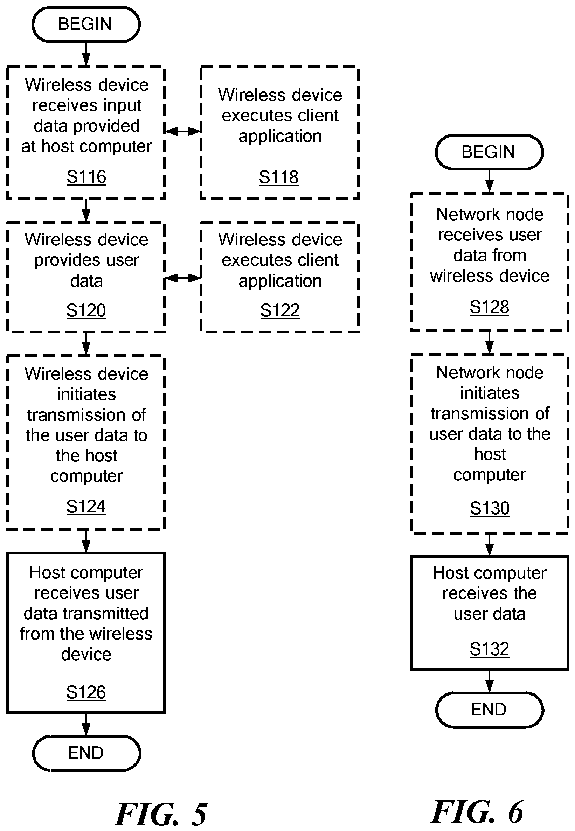

FIG. 5 is a flowchart illustrating an example method implemented in a communication system, such as, for example, the communication system of FIG. 1, in accordance with one embodiment. The communication system may include a host computer 24, a network node 16 and a WD 22, which may be those described with reference to FIGS. 1 and 2. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 6 is a flowchart illustrating an example method implemented in a communication system, such as, for example, the communication system of FIG. 1, in accordance with one embodiment. The communication system may include a host computer 24, a network node 16 and a WD 22, which may be those described with reference to FIGS. 1 and 2. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

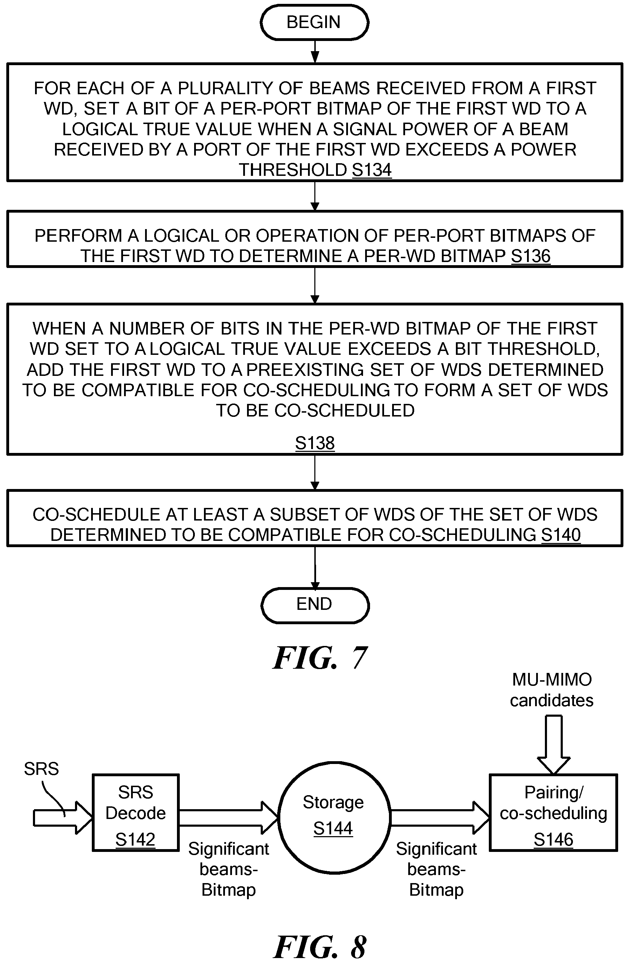

FIG. 7 is a flowchart of an example process in a network node 16 for exclusive beam pairing for multi-user multiple input multiple output (MU-MIMO). One or more blocks described herein may be performed by one or more elements of network node 16 such as by one or more of processing circuitry 68 (including the co-scheduler unit 32), processor 70, radio interface 62 and/or communication interface 60. Network node 16 such as via processing circuitry 68 and/or processor 70 and/or radio interface 62 and/or communication interface 60 is configured to: for each of a plurality of beams received from a first WD 22, set a bit of a per-port bitmap of the first WD 22 to a logical true value when a signal power of a beam received by a port of the first WD 22 exceeds a power threshold (Block S134). The process also includes performing a logical OR operation of per-port bitmaps of the first WD 22 to determine a per-WD bitmap (Block S136). The process also includes: when a number of bits in the per-WD bitmap of the first WD 22 having a logical true value exceeds a first bit threshold, adding the first WD 22 to a preexisting set of WDs 22 determined to be compatible for co-scheduling to form a set of WDs 22 to be co-scheduled (Block S138). The process also includes co-scheduling at least a subset of WDs 22 of the set of WDs 22 determined to be compatible for co-scheduling (Block S140).

In some embodiments, the method also includes: when the preexisting set of WDs 22 is not empty and when a number of bits in the per-WD bitmap of the first WD 22 set to a logical true value does not exceed a second bit threshold (which may, be the same as or different from the first bit threshold), then: tentatively adding the first WD 22 to the preexisting set of WDs 22 to form a tentative set of WDs 22 to be co-scheduled; for each WD (22) in the tentative set of WDs (22) having a number of bits in its per-WD bitmap set to a logical true value that does not exceed the second bit threshold, including the tentatively added first WD (22), determining a logical AND operation of a per-WD bitmap of that WD (22) with a logical complement of each per-WD bitmap of each other WD (22) in the tentative set of WDs (22) having a number of bits in its per-WD bitmap set to a logical true value that does not exceed the second bit threshold;

when each logical AND operation results in a value greater than zero, confirming addition of the first WD 22 to the preexisting set of WDs 22 to form the set of WDs 22 to be co-scheduled; and when at least one of the logical AND operations does not result in a value greater than zero, excluding the first WD 22 from the set of WDs 22 to be co-scheduled.. In some embodiments, the first WD 22 has multiple ports and the first power threshold is determined based at least in part on a total signal power of a plurality of beams across the multiple ports of the first WD 22. In some embodiments, a number of ports of the first WD 22 is based at least in part on a rank indicator. In some embodiments, the first power threshold is determined based at least in part on scaling the total signal power. In some embodiments, the method also includes determining a set of N most powerful beams received by the first WD 22, N being an integer greater than 1; and setting bits of the per-WD bitmap of the first WD 22 that correspond to the N most powerful beams. In some embodiments, the method includes resetting any remaining bits of the per-WD bitmap to a logical false value. In some embodiments, the first WD 22 is selected based at least in part on a priority among a plurality of WDs 22. In some embodiments, once the first WD 22 is excluded from the set of WDs 22 to be co-scheduled, the first WD 22 is not subsequently tentatively added to the set of WDs 22 to be co-scheduled. In some embodiments, the first WD 22 has multiple ports and the power threshold is determined based at least in part on a power of a beam with strongest power among a plurality of beams associated with the ports of the first WD 22. In some embodiments, each of the plurality of beams is associated with a different sounding reference signal, SRS, channel estimate and the power of a beam corresponding to a bit is based at least in part on a corresponding SRS channel estimate. In some embodiments, the method includes operating a multi-user multiple input multiple output, MU-MIMO communications protocol.

Having described the general process flow of arrangements of the disclosure and having provided examples of hardware and software arrangements for implementing the processes and functions of the disclosure, the sections below provide details and examples of arrangements for exclusive beam pairing for multi-user multiple input multiple output (MU-MIMO).

On SRS channel estimate reception, signal power is analyzed and bitmaps showing which beams have a significant amount of power are created, per WD port, and stored.

During scheduling, a list of MU-MIMO candidates is produced, and the bitmaps are used to potentially exclude some of them. By excluding WDs 22 that would cause interference, performance is increased.

FIG. 8 is a flow diagram of an example process for co-scheduling WDs 22 by a network node 16, including the co-scheduler unit 32. An SRS decoding block S142 provides a bitmap of significant beams which are stored (for example in memory 72) at Block S144. The bitmap of significant beams is further processed by a pairing and co-scheduling Block S146. The SRS decoding Block S142 in the co-scheduler unit 32 creates bitmaps per WD port (per-WD port bitmaps).

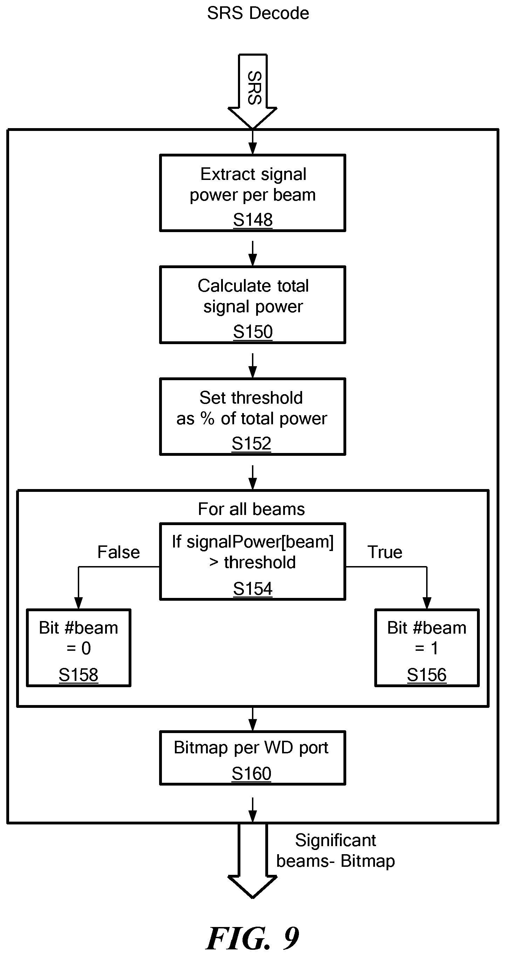

FIG. 9 is a flow diagram of an example of an SRS decoding Block S142. A sounding reference signal, SRS, received on one or more beams is processed to extract a signal power per beam (Block S148). The extracted signal power of the beams may be summed to determine a total signal power (Block S150). A first threshold is determined based at least in part on the total signal power. For example, the first threshold may be determined as a percent of the total signal power (Block S152). This may be done on a port-by-port basis. In some embodiments, the first threshold may be selected based on a strongest beam on each port.

Then, for each and every beam of at least one beam, the SRS decoding Block S142 is configured to determine when the signal power of a beam is greater than the first threshold (Block S154). If the signal power of the beam is greater than the first threshold, a bit in a per-WD bitmap is set to a logically true value (Block S156). If the signal power of the beam is not greater than the first threshold, then the bit in the per-WD bitmap is set to a logically false value (Block S158). For example, the logically true value may be a logic level 1 and the logically false value may be a logic level zero. A logic level 1 may be equivalent to setting a bit to 1, and a logic level zero may be equivalent to setting a bit to zero. A result of the SRS decoding process is a per-WD port bitmap (Block S160) where significant beams are indicated by a logical true value for beams that meet the first threshold comparison test of Block S154.

Thus, the total signal power for a port, over all beams, may be calculated, and a first threshold set based on a percentage of this power or based on the power of one or more select beams, optionally scaled by the number of beams. The signal power for each beam is then compared to the first threshold and the bit corresponding to each direction is set to a logically true value if the first threshold is exceeded. The bitmaps could also be created in a different way, e.g., by selecting the N strongest beams, N being an integer greater than zero.

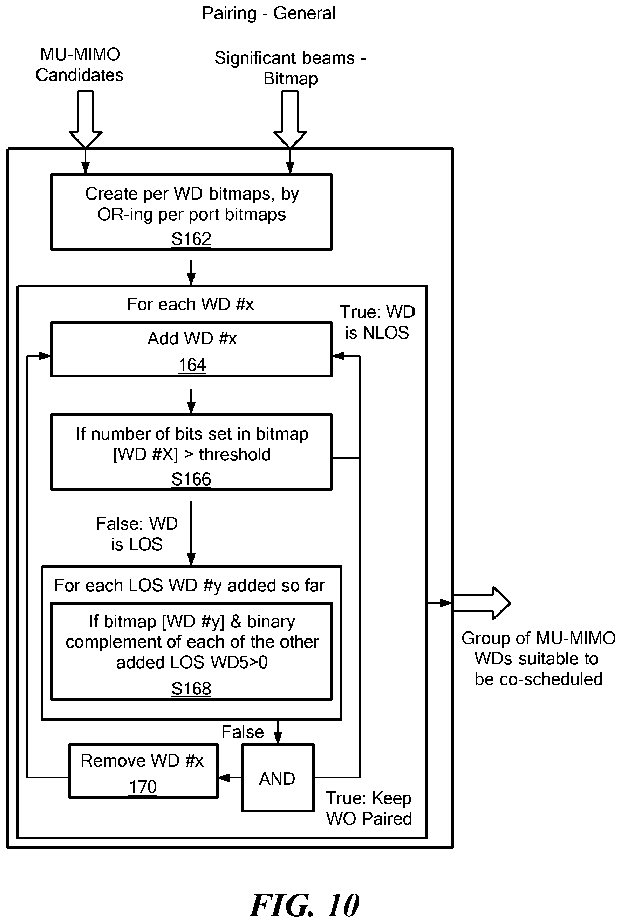

FIG. 10 is a flow diagram of an example process for pairing performed by the co-scheduler unit 32, and more particularly by the pairing and co-scheduling Block S142. First, per-WD bitmaps are created by performing a logical OR operation of the bitmaps for different ports of the same WD 22 together (Block S158). The bits in the bit map may be arranged based on rank of each port or other available information, or based on a fixed number.

Each MU-MIMO candidate WD 22, in a particular order that may be based on a priority, may be tentatively added to a group of candidate WDs 22 to be co-scheduled, to see what the consequences would be (Block S162). Once added to the group of candidate WDs, the number of bits set to a logical true value (in Block S164) in the per-WD bitmap is checked to determine if it is LOS or NLOS. This may be done by comparing the number of bits set to a logically true value in the per-WD bitmap to a second threshold (Block S166). When the number of bits set to the logically true value in the per-WD bitmap exceeds the second threshold, the WD 22 is deemed to be NLOS and is added to the group of candidate WDs 22. When the number of bits set to the logically true value in the per-WD bitmap does not exceed the second threshold, the WD 22 is deemed to be LOS the process continues with Block S168.

When the WD 22 is an LOS WD 22, the LOS WD 22 is checked to determine if it has at least one beam that only the LOS WD 22 is using. This is accomplished by a bitwise logical AND operation of the per-WD bitmap of the LOS WD 22 with the complement (logical NOT operation) of the per-WD bitmap of all the LOS WDs 22 that are already in the group of candidate WDs 22. Thus, for each LOS WD 22, a logical AND operation is performed between the per-WD bitmap of the tentatively added LOS WD 22 and the binary complement of the per-WD bitmap of WDs 22 already in the group of candidate WDs 22 (Block S168).

The result of this logical AND operation is compared to zero (Block S168). If the number resulting from the logical AND operation is greater than zero, then the tentatively added WD 22 is added to the group of candidate WDs 22. If the resulting bitmaps are all larger than zero, then the last WD 22 added has a beam exclusive to it, and all the previous ones still do as well, so the tentatively added WD 22 is kept as part of the group of candidate WDs 22. If adding this tentatively added WD 22 resulted in either it or a previously added WD 22 not having an exclusive beam, i.e., one of the bitmaps was equal to 0, then the tentatively added WD 22 is removed from the group of candidate WDs 22 (Block S170), and the process proceeds to S160 to tentatively add the next MU-MIMO candidate WD 22. A result of this process is a group of WDs 22 suitable for co-scheduling.

In some embodiments, WDs 22 deemed to be NLOS WDs 22 may always be added and are not checked against LOS WDs 22 (as in the process of block S168). This is because the NLOS WDs 22 usually have enough significant beams that the weight calculation algorithm will enable differentiation between these beams and other beams. Note also that the first LOS WD 22 (which may be the highest priority WD 22) always gets added to the group, as there are no other LOS WDs 22 to which to compare the bitmap.

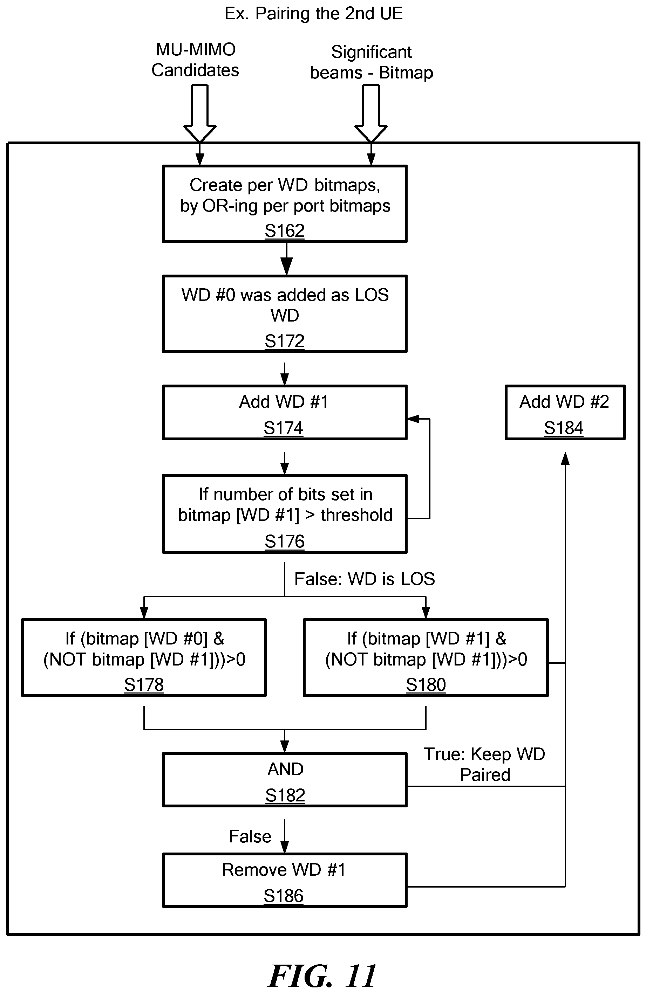

FIG. 11 is a flow diagram of an example pairing and co-scheduling process performed in Block S146. In this example, a first LOS WD 22 (WD #0) has been already added to the group, and a second WD 22 (WD #1) is checked for suitability for co-scheduling with the first LOS WD 22. Once again, in Block S162, per-WD bitmaps are created by logically OR-ing the per port bit maps. The process includes confirming that a first WD 22 (WD #0) has been added to the group of candidate WDs 22 as an LOS WD 22 (Block S172). Then the second WD 22 (WD #1) is tentatively added (Block S174).

The number of bits in the per-WD bitmap for WD #1 that are logically true is compared to a third threshold (Block S176). When the number of bits in the per-WD bitmap for WD #1 that are logically true is greater than the third threshold, then the WD #1 is deemed to be a NLOS WD 22 and is added to the group of candidate WDs 22 (Block S174). When the number of bits in the per-WD bitmap that are logically true does not exceed the third threshold, the WD #1 is deemed to be an LOS WD 22 and the process proceeds to Blocks S176 and S178, which may be performed in parallel.

In Block S176, the per-WD bitmap for WD #0 is logically AND-ed with the complement of the per-WD bitmap for WD #1 to produce a first result. In Block S180, the per-WD bitmap for WD #1 is logically AND-ed with the complement of the per-WD bitmap for WD #0 to produce a second result. At Block S182 the first result is logically AND-ed with the second result to produce a third result. When the third result is logically true, then the WD #1 is retained in the group of candidate WDs 22, and the next WD 22, WD #2, is tentatively added to the group of candidate WDs 22 (Block S184) and determined for co-scheduling suitability according to the methods disclosed herein. When the third result is logically false, WD #1 is removed (Block S186).

To summarize the example of FIG. 11, the second WD 22 is tentatively added to the group, and a check is made of whether it is LOS or NLOS by comparing the number of significant beams set in the bitmap to a threshold. A NLOS WD 22 needs no further check and is added the group of candidate WDs 22. For a LOS WD 22, it is determined whether that WD #0 has at least one beam that WD #1 does not, and WD#1 has at least one beam that WD #0 does not. If this is the case, WD #1 is retained in the group, otherwise WD #1 is removed from the group. The process continues by consideration of adding WD #2.

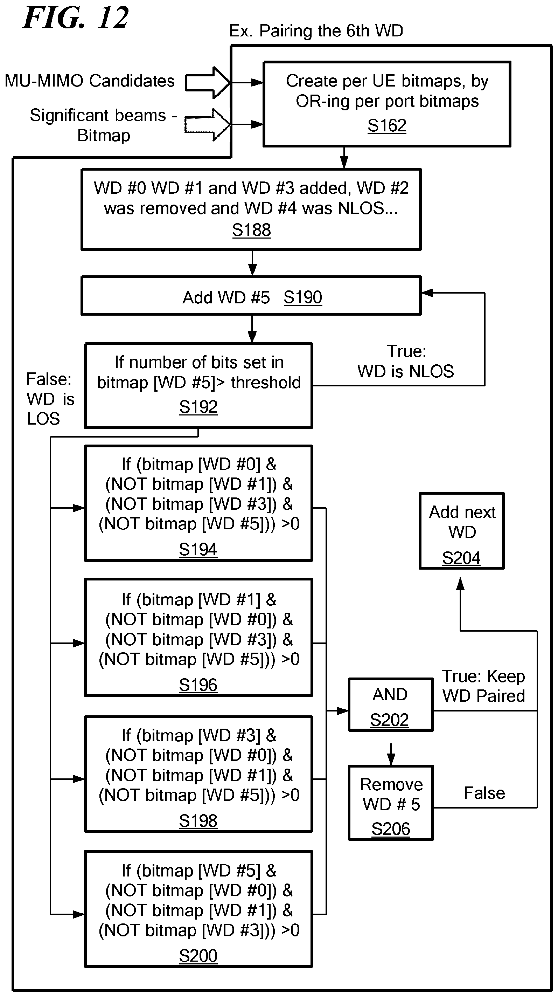

The process of adding and/or removing candidate WDs 22 from the group of candidate WDs 22 to be co-scheduled may be continued. Consider an example process of tentatively adding a sixth WD 22 to a group of previously selected candidate WDs 22, as shown in FIG. 12. The process includes Block S162 for creating the per-WD bitmaps as described above. In the example of FIG. 12, WD #1 and WD #3 have been added, WD #2 has been removed and WD #4 was determined to be NLOS (Block S188). Now the sixth WD 22, WD #5 is tentatively added to the group of candidate WDs 22 (Block S190). When the number of bits of the per-WD bitmap for WD #5 that are logically true exceeds a fourth threshold (Block S192), WD #5 is deemed to be NLOS and is added to the group of candidate WDs 22 obtained so far (Block S190). When the number of bits of the per-WD bitmap for WD #5 that are logically true does not exceed the fourth threshold (Block S190), the process continues to Blocks S194, S196, S198 and S200, which embody processes that may be performed in parallel.

In Block S194, the per-WD bitmap of WD #0 and the complement of the per-WD bitmaps of the remaining WDs 22 in the group of candidate WDs 22 are logically AND-ed together and the result is compared to zero. Similarly, in Block S196, the per-WD bitmap of WD #1 and the complement of the per-WD bitmaps of the remaining WDs 22 in the group of candidate WDs 22 are logically AND-ed together and the result in compared to zero. Likewise, in Block S198, the per-WD bitmap of WD #3 and the complement of the per-WD bitmaps of the remaining WDs 22 in the group of candidate WDs 22 are logically AND-ed together and the result in compared to zero. Also, in Block S200, the per-WD bitmap of WD #5 and the complement of the per-WD bitmaps of the remaining WDs 22 in the group of candidate WDs 22 are logically AND-ed together and the result in compared to zero.

The results output by Blocks S194, S196, S198 and S200 are logically AND-ed together at (Block S202). If the result of this logical AND operation is logically true, then the addition of WD #5 to the group of candidate WDs 22 is confirmed. Then the process continues to Block S204 where the next candidate WD 22 (if any remaining candidate WDs 22 are to be considered) is tentatively added and tested according to the methods disclosed above with respect to Blocks S188 to S202. If the result of the logical AND operation of Block S200 is logically false, then WD #5 is removed from the group of candidate WDs 22 (Block S206). Then the process continues to Block S204 to tentatively add and test the next candidate WD 22 to be considered, if any are remaining).

Thus, to summarize the example of FIG. 12, when the new WD 22 is LOS, it is checked that each of the previously added LOS WDs 22, and the new WD 22, all have at least one significant beam that is not used by any of the other LOS WDs 22 currently under consideration. There are no checks against the bitmaps of removed LOS WDs 22 or added NLOS WDs 22. If each of the added LOS WDs 22 has at least one significant beam to itself, the new WD 22 is kept as part of the group of candidate WDs, and if the WD does not have at least one significant beam to itself, the WD is removed.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that may be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that may direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments may be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:
- LOS: Line Of Sight
- MU-MIMO: Multi-User, Multiple input Multiple Output
- NLOS: Non Line Of Sight
- SRS: Sounding Reference Signal

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method in a network node (16) configured to communicate with a plurality of wireless devices, WDs (22), the method comprising:
for each of a plurality of beams received from a first WD (22), setting (S134) a bit of a per-port bitmap of the first WD (22) to a logical true value when a signal power of a beam received by a port of the first WD (22) exceeds a power threshold;
performing (S136) a logical OR operation of per-port bitmaps of the first WD (22) to determine a per-WD bitmap;
when a number of bits in the per-WD bitmap of the first WD (22) having a logical true value exceeds a first bit threshold, adding (S138) the first WD (22) to a preexisting set of WDs (22) determined to be compatible for co-scheduling to form a set of WDs (22) to be co-scheduled; and
co-scheduling (S140) at least a subset of WDs (22) of the set of WDs (22) determined to be compatible for co-scheduling.

2. The method of Claim 1, further comprising:
when the preexisting set of WDs (22) is not empty and when a number of bits in the per-WD bitmap of the first WD (22) set to a logical true value does not exceed a second bit threshold, then:
tentatively adding the first WD (22) to the preexisting set of WDs (22) to form a tentative set of WDs (22) to be co-scheduled;
for each WD (22) in the tentative set of WDs (22) having a number of bits in its per-WD bitmap set to a logical true value that does not exceed the second bit threshold, including the tentatively added first WD (22), determining a logical AND operation of a per-WD bitmap of that WD (22) with a logical complement of each per-WD bitmap of each other WD (22) in the tentative set of WDs (22) having a number of bits in its per-WD bitmap set to a logical true value that does not exceed the second bit threshold;
when each logical AND operation results in a value greater than zero, confirming addition of the first WD (22) to the preexisting set of WDs (22) to form the set of WDs (22) to be co-scheduled; and
when at least one of the logical AND operations does not result in a value greater than zero, excluding the first WD (22) from the set of WDs (22) to be co-scheduled.

3. The method of Claim 2, wherein the first WD (22) has multiple ports and the power threshold is determined based at least in part on a total signal power of a plurality of beams across the multiple ports of the first WD (22).

4. A network node (16) configured to communicate with a plurality of wireless devices, WDs (22), the network node (16) comprising processing circuitry (68) configured to:
for each of a plurality of beams received from a first WD (22), set a bit of a per-port bitmap of the first WD (22) to a logical true value when a signal power of a beam received by a port of the first WD (22) exceeds a power threshold;
perform a logical OR operation of per-port bitmaps of the first WD (22) to determine a per-WD bitmap;
when a number of bits in the per-WD bitmap of the first WD (22) having a logical true value exceeds a first bit threshold, add the first WD (22) to a preexisting set of WDs (22) determined to be compatible for co-scheduling to form a set of WDs (22) to be co-scheduled; and
co-schedule at least a subset of WDs (22) of the set of WDs (22) determined to be compatible for co-scheduling.

5. The network node (16) of Claim 4, wherein the processing circuitry (68) is further configured to:
when the preexisting set of WDs (22) is not empty and when a number of bits in the per-WD bitmap of the first WD (22) set to a logical true value does not exceed a second bit threshold, then:
tentatively add the first WD (22) to the preexisting set of WDs (22) to form a tentative set of WDs (22) to be co-scheduled;
for each WD (22) in the tentative set of WDs (22) having a number of bits in its per-WD bitmap set to a logical true value that does not exceed the second bit threshold, including the tentatively added first WD (22), determine a logical AND operation of a per-WD bitmap of that WD (22) with a logical complement of each per-WD bitmap of each other WD (22) in the tentative set of WDs (22) having a number of bits in its per-WD bitmap set to a logical true value that does not exceed the second bit threshold;
when each logical AND operation results in a value greater than zero, confirm addition of the first WD (22) to the preexisting set of WDs (22) to form the set of WDs (22) to be co-scheduled; and
when at least one of the logical AND operations does not result in a value greater than zero, exclude the first WD (22) from the set of WDs (22) to be co-scheduled.

6. The network node (16) of Claim 5, wherein the first WD (22) has multiple ports and the power threshold is determined based at least in part on a total signal power of a plurality of beams across the multiple ports of the first WD (22).

7. The network node (16) of any of Claims 5 and 6, wherein a number of ports of the first WD (22) is based at least in part on a rank indicator.

8. The network node (16) of any of Claims 5-7, wherein the power threshold is determined based at least in part on scaling the total signal power.

9. The network node (16) of any of Claims 4-8, wherein the processing circuitry (68) is further configured to:
determine a set of N most powerful beams received by the first WD (22), N being an integer greater than 1; and
set bits of the per-WD bitmap of the first WD (22) that correspond to the N most powerful beams.

10. The network node (16) of Claim 9, wherein the processing circuitry (68) is further configured to reset any remaining bits of the per-WD bitmap not included in the set of N most powerful beams to a logical false value.

11. The network node (16) of any of Claims 4-10, wherein the first WD (22) is selected based at least in part on a priority among a plurality of WDs (22).

12. The network node (16) of Claim 11, wherein, once the first WD (22) is excluded from the set of WDs (22) to be co-scheduled, the first WD (22) is not subsequently tentatively added to the set of WDs (22) to be co-scheduled.

13. The network node (16) of any of Claims 4-12, wherein the first WD (22) has multiple ports and the power threshold is determined based at least in part on a power of a beam with strongest power among associated with ports of the first WD (22).

14. The network node (16) of any of Claims 4-13, wherein each of the plurality of beams is associated with a different sounding reference signal, SRS, channel estimate and the power of a beam corresponding to a bit is based at least in part on a corresponding SRS channel estimate.

15. The network node (16) of any of Claims 4-14, wherein the network node is configured to operate a multi-user multiple input multiple output, MU-MIMO communications protocol.

## Patentansprüche

1. Verfahren in einem Netzwerkknoten (16), der zum Kommunizieren mit einer Mehrzahl von drahtlosen Vorrichtungen, WD, (22) konfiguriert ist, wobei das Verfahren Folgendes umfasst:
für jeden einer Mehrzahl von Strahlen, die von einer ersten WD (22) empfangen werden, Setzen (S134) eines Bits einer Pro-Port-Bitmap der ersten WD (22) auf einen logischen wahren Wert, wenn eine Signalleistung eines Strahls, der von einem Port der ersten WD (22) empfangen wird, einen Leistungsschwellenwert überschreitet;
Durchführen (S136) einer logischen ODER-Verknüpfung von Pro-Port-Bitmaps der ersten WD (22), um eine Pro-WD-Bitmap zu bestimmen;
wenn eine Anzahl von Bits in der Pro-WD-Bitmap der ersten WD (22) mit einem logischen wahren Wert einen ersten Bit-Schwellenwert überschreitet, Hinzufügen (S138) der ersten WD (22) zu einem vorher bestehenden Satz von WDs (22), die als kompatibel für gemeinsame Disposition bestimmt wurden, um einen Satz von gemeinsam zu disponierenden WDs (22) zu bilden;
gemeinsames Disponieren (S140) mindestens einer Teilmenge von WDs (22) des Satzes von WDs (22), die als kompatibel für gemeinsame Disposition bestimmt wurden.

2. Verfahren nach Anspruch 1, ferner umfassend:
wenn der vorher bestehende Satz von WDs (22) nicht leer ist und wenn eine Anzahl von auf einen logischen wahren Wert gesetzten Bits in der Pro-WD-Bitmap der ersten WD (22) einen zweiten Bit-Schwellenwert nicht überschreitet, dann:
vorläufiges Hinzufügen der ersten WD (22) zu dem vorher bestehenden Satz von WDs (22), um einen vorläufigen Satz von gemeinsam zu disponierenden WDs (22) zu bilden;
für jede WD (22) in dem vorläufigen Satz von WDs (22) mit einer Anzahl von auf einen logischen wahren Wert gesetzten Bits in ihrer Pro-WD-Bitmap, die den zweiten Bit-Schwellenwert nicht überschreitet, einschließlich der vorläufig hinzugefügten WD (22), Bestimmen einer logischen UND-Verknüpfung einer Pro-WD-Bitmap dieser WD (22) mit einem logischen Komplement jeder Pro-WD-Bitmap jeder anderen WD (22) in dem vorläufigen Satz von WDs (22) mit einer Anzahl von auf einen logischen wahren Wert gesetzten Bits in ihrer Pro-WD-Bitmap, die den zweiten Bit-Schwellenwert nicht überschreitet;
wenn jede logische UND-Verknüpfung zu einem Wert führt, der größer als null ist, Bestätigen der Hinzufügung der ersten WD (22) zu dem vorher bestehenden Satz von WDs (22), um den Satz von gemeinsam zu disponierenden WDs (22) zu bilden; und,
wenn mindestens eine der logischen UND-Verknüpfungen nicht zu einem Wert führt, der größer als null ist, Ausschließen der ersten WD (22) aus dem Satz von gemeinsam zu disponierenden WDs (22).

3. Verfahren nach Anspruch 2, wobei die erste WD (22) mehrere Ports aufweist und der Leistungsschwellenwert zumindest teilweise basierend auf einer Gesamtsignalleistung einer Mehrzahl von Strahlen über die mehreren Ports der ersten WD (22) bestimmt wird.

4. Netzwerkknoten (16), konfiguriert zum Kommunizieren mit einer Mehrzahl von drahtlosen Vorrichtungen, WDs, (22), wobei der Netzwerkknoten (16) Verarbeitungsschaltungsanordnung (68) umfasst, die zu Folgendem konfiguriert ist:
für jede einer Mehrzahl von Strahlen, die von einer ersten WD (22) empfangen werden, Setzen eines Bits einer Pro-Port-Bitmap der ersten WD (22) auf einen logischen wahren Wert, wenn eine Signalleistung eines Strahls, der von einem Port der ersten WD (22) empfangen wird, einen Leistungsschwellenwert überschreitet;
Durchführen einer logischen ODER-Verknüpfung von Pro-Port-Bitmaps der ersten WD (22), um eine Pro-WD-Bitmap zu bestimmen;
wenn eine Anzahl von Bits in der Pro-WD-Bitmap der ersten WD (22) mit einem logischen wahren Wert einen ersten Bit-Schwellenwert überschreitet, Hinzufügen der ersten WD (22) zu einem vorher bestehenden Satz von WDs (22), die als kompatibel für gemeinsame Disposition bestimmt wurden, um einen Satz von gemeinsam zu disponierenden WDs (22) zu bilden;
gemeinsames Disponieren mindestens einer Teilmenge von WDs (22) des Satzes von WDs (22), die als kompatibel für gemeinsame Disposition bestimmt wurden.

5. Netzwerkknoten (16) nach Anspruch 4, wobei die Verarbeitungsschaltungsanordnung (68) ferner konfiguriert ist zum:
wenn der vorher bestehende Satz von WDs (22) nicht leer ist und wenn eine Anzahl von auf einen logischen wahren Wert gesetzten Bits in der Pro-WD-Bitmap der ersten WD (22) einen zweiten Bit-Schwellenwert nicht überschreitet, dann:
vorläufiges Hinzufügen der ersten WD (22) zu dem vorher bestehenden Satz von WDs (22), um einen vorläufigen Satz von gemeinsam zu disponierenden WDs (22) zu bilden;
für jede WD (22) in dem vorläufigen Satz von WDs (22) mit einer Anzahl von auf einen logischen wahren Wert gesetzten Bits in ihrer Pro-WD-Bitmap, die den zweiten Bit-Schwellenwert nicht überschreitet, einschließlich der vorläufig hinzugefügten WD (22), Bestimmen einer logischen UND-Verknüpfung einer Pro-WD-Bitmap dieser WD (22) mit einem logischen Komplement jeder Pro-WD-Bitmap jeder anderen WD (22) in dem vorläufigen Satz von WDs (22) mit einer Anzahl von auf einen logischen wahren Wert gesetzten Bits in ihrer Pro-WD-Bitmap, die den zweiten Bit-Schwellenwert nicht überschreitet;
wenn jede logische UND-Verknüpfung zu einem Wert führt, der größer als null ist, Bestätigen der Hinzufügung der ersten WD (22) zu dem vorher bestehenden Satz von WDs (22), um den Satz von gemeinsam zu disponierenden WDs (22) zu bilden; und,
wenn mindestens eine der logischen UND-Verknüpfungen nicht zu einem Wert führt, der größer als null ist, Ausschließen der ersten WD (22) aus dem Satz von gemeinsam zu disponierenden WDs (22).

6. Netzwerkknoten (16) nach Anspruch 5, wobei die erste WD (22) mehrere Ports aufweist und der Leistungsschwellenwert zumindest teilweise basierend auf einer Gesamtsignalleistung einer Mehrzahl von Strahlen über die mehreren Ports der ersten WD (22) bestimmt wird.

7. Netzwerkknoten (16) nach einem der Ansprüche 5 und 6, wobei eine Anzahl von Ports der ersten WD (22) zumindest teilweise auf einem Rangindikator basiert.

8. Netzwerkknoten (16) nach einem der Ansprüche 5-7, wobei der Leistungsschwellenwert zumindest teilweise basierend auf einem Skalieren der Gesamtsignalleistung bestimmt wird.

9. Netzwerkknoten (16) nach einem der Ansprüche 4-8, wobei die Verarbeitungsschaltungsanordnung (68) ferner zu Folgendem konfiguriert ist:
Bestimmen eines Satzes von N leistungsstärksten Strahlen, die von der WD (22) empfangen werden, wobei N eine ganze Zahl größer als 1 ist; und
Setzen von Bits der Pro-WD-Bitmap der ersten WD (22), die den N leistungsstärksten Strahlen entsprechen.

10. Netzwerkknoten (16) nach Anspruch 9, wobei die Verarbeitungsschaltungsanordnung (68) ferner dazu konfiguriert ist, alle verbleibenden Bits der Pro-WD-Bitmap, die nicht in dem Satz von leistungsstärksten Strahlen umfasst sind, auf einen logischen falschen Wert zurückzusetzen.

11. Netzwerkknoten (16) nach einem der Ansprüche 4-10, wobei die erste WD (22) zumindest teilweise basierend auf einer Priorität unter einer Mehrzahl von WDs (22) ausgewählt wird.

12. Netzwerkknoten (16) nach Anspruch 11, wobei, sobald die erste WD (22) aus dem Satz von gemeinsam zu disponierenden WDs (22) ausgeschlossen ist, die erste WD (22) anschließend nicht vorläufig zu dem Satz von gemeinsam zu disponierenden WDs (22) hinzugefügt wird.

13. Netzwerkknoten (16) nach Anspruch 4-12, wobei die erste WD (22) mehrere Ports aufweist und der Leistungsschwellenwert zumindest teilweise basierend auf einer Leistung eines Strahls mit der stärksten Leistung unter den assoziierten Ports der ersten WD (22) bestimmt wird.

14. Netzwerkknoten (16) nach Anspruch 4-13, wobei jeder der Mehrzahl von Strahlen mit einer anderen Sondierungsreferenzsignal-Kanalschätzung, SRS-Kanalschätzung, assoziiert ist und die Leistung eines Strahls, der einem Bit entspricht, zumindest teilweise auf einer entsprechenden SRS-Kanalschätzung basiert.

15. Netzwerkknoten (16) nach Anspruch 4-14, wobei der Netzwerkknoten dazu konfiguriert ist, ein Mehrbenutzer-Mehrfacheingabe-Mehrfachausgabe-Kommunikationsprotokoll, MU-MIMO-Kommunikationsprotokoll, zu betreiben.

## Revendications

1. Procédé dans un nœud de réseau (16) configuré pour communiquer avec une pluralité de dispositifs sans fil, WD (22), le procédé comprenant :
pour chacun d'une pluralité de faisceaux reçus depuis un premier WD (22), la définition (S134) d'un bit d'un bitmap par port du premier WD (22) à une valeur VRAI logique lorsqu'une puissance de signal d'un faisceau reçu par un port du premier WD (22) dépasse un seuil de puissance ;
la réalisation (S136) d'une opération OU logique de bitmaps par port du premier WD (22) pour déterminer un bitmap par WD ;
lorsqu'un nombre de bits dans le bitmap par WD du premier WD (22) présentant une valeur VRAI logique dépasse un premier seuil de bits, l'ajout (S138) du premier WD (22) à un ensemble préexistant de WD (22) déterminés comme étant compatibles avec une planification en commun afin de former un ensemble de WD (22) à planifier en commun ; et
la planification en commun (S140) d'au moins un sous-ensemble de WD (22) de l'ensemble de WD (22) déterminés comme étant compatibles avec une planification en commun.

2. Procédé selon la revendication 1, comprenant en outre :
lorsque l'ensemble préexistant de WD (22) n'est pas vide et lorsqu'un nombre de bits dans le bitmap par WD du premier WD (22) défini à une valeur VRAI logique ne dépasse pas un deuxième seuil de bits :
l'ajout provisoire du premier WD (22) à l'ensemble préexistant de WD (22) pour former un ensemble provisoire de WD (22) à planifier en commun ;
pour chaque WD (22) dans l'ensemble provisoire de WD (22) présentant un nombre de bits dans son bitmap par WD défini à une valeur VRAI logique qui ne dépasse pas le deuxième seuil de bits, incluant le premier WD (22) ajouté provisoirement, la détermination d'une opération ET logique d'un bitmap par WD de ce WD (22) avec un complément logique de chaque bitmap par WD de chaque autre WD (22) dans l'ensemble provisoire de WD (22) présentant un nombre de bits dans son bitmap par WD défini à une valeur VRAI logique qui ne dépasse pas le deuxième seuil de bits ;
lorsque chaque opération ET logique engendre une valeur supérieure à zéro, la confirmation de l'ajout du premier WD (22) à l'ensemble préexistant de WD (22) pour former l'ensemble de WD (22) à planifier en commun ; et
lorsque au moins l'une des opérations ET logiques n'engendre pas une valeur supérieure à zéro, l'exclusion du premier WD (22) de l'ensemble de WD (22) à planifier en commun.

3. Procédé selon la revendication 2, dans lequel le premier WD (22) présente de multiples ports et le seuil de puissance est déterminé sur la base au moins en partie d'une puissance de signal totale d'une pluralité de faisceaux sur les multiples ports du premier WD (22).

4. Nœud de réseau (16) configuré pour communiquer avec une pluralité de dispositifs sans fil, WD (22), le nœud de réseau (16) comprenant une circuiterie de traitement (68) configurée pour :
pour chacun d'une pluralité de faisceaux reçus depuis un premier WD (22), définir un bit d'un bitmap par port du premier WD (22) à une valeur VRAI logique lorsqu'une puissance de signal d'un faisceau reçu par un port du premier WD (22) dépasse un seuil de puissance ;
réaliser une opération OU logique de bitmaps par port du premier WD (22) pour déterminer un bitmap par WD ;
lorsqu'un nombre de bits dans le bitmap par WD du premier WD (22) présentant une valeur VRAI logique dépasse un premier seuil de bits, ajouter le premier WD (22) à un ensemble préexistant de WD (22) déterminés comme étant compatibles avec une planification en commun afin de former un ensemble de WD (22) à planifier en commun ; et
planifier en commun au moins un sous-ensemble de WD (22) de l'ensemble de WD (22) déterminés comme étant compatibles avec une planification en commun.

5. Nœud de réseau (16) selon la revendication 4, dans lequel la circuiterie de traitement (68) est en outre configurée pour :
lorsque l'ensemble préexistant de WD (22) n'est pas vide et lorsqu'un nombre de bits dans le bitmap par WD du premier WD (22) défini à une valeur VRAI logique ne dépasse pas un deuxième seuil de bits :
ajouter provisoirement le premier WD (22) à l'ensemble préexistant de WD (22) pour former un ensemble provisoire de WD (22) à planifier en commun ;
pour chaque WD (22) dans l'ensemble provisoire de WD (22) présentant un nombre de bits dans son bitmap par WD défini à une valeur VRAI logique qui ne dépasse pas le deuxième seuil de bits, incluant le premier WD (22) ajouté provisoirement, déterminer une opération ET logique d'un bitmap par WD de ce WD (22) avec un complément logique de chaque bitmap par WD de chaque autre WD (22) dans l'ensemble provisoire de WD (22) présentant un nombre de bits dans son bitmap par WD défini à une valeur VRAI logique qui ne dépasse pas le deuxième seuil de bits ;
lorsque chaque opération ET logique engendre une valeur supérieure à zéro, confirmer l'ajout du premier WD (22) à l'ensemble préexistant de WD (22) pour former l'ensemble de WD (22) à planifier en commun ; et
lorsque au moins l'une des opérations ET logiques n'engendre pas une valeur supérieure à zéro, exclure le premier WD (22) de l'ensemble de WD (22) à planifier en commun.

6. Nœud de réseau (16) selon la revendication 5, dans lequel le premier WD (22) présente de multiples ports et le seuil de puissance est déterminé sur la base au moins en partie d'une puissance de signal totale d'une pluralité de faisceaux sur les multiples ports du premier WD (22).

7. Nœud de réseau (16) selon l'une quelconque des revendications 5 et 6, dans lequel un nombre de ports du premier WD (22) est basé au moins en partie sur un indicateur de rang.

8. Nœud de réseau (16) selon l'une quelconque des revendications 5 à 7, dans lequel le seuil de puissance est déterminé sur la base au moins en partie de la mise à l'échelle de la puissance de signal totale.

9. Nœud de réseau (16) selon l'une quelconque des revendications 4 à 8, dans lequel la circuiterie de traitement (68) est en outre configurée pour :
déterminer un ensemble de N faisceaux les plus puissants reçus par le premier WD (22), N étant un entier supérieur à 1 ; et
définir des bits du bitmap par WD du premier WD (22) qui correspondent aux N faisceaux les plus puissants.

10. Nœud de réseau (16) selon la revendication 9, dans lequel la circuiterie de traitement (68) est en outre configurée pour réinitialiser les bits restants du bitmap par WD qui ne sont pas inclus dans l'ensemble des N faisceaux les plus puissants à une valeur FAUX logique.

11. Nœud de réseau (16) selon l'une quelconque des revendications 4 à 10, dans lequel le premier WD (22) est sélectionné sur la base au moins en partie d'une priorité parmi une pluralité de WD (22).

12. Nœud de réseau (16) selon la revendication 11, dans lequel, une fois que le premier WD (22) est exclu de l'ensemble de WD (22) à planifier en commun, le premier WD (22) ne fait plus l'objet d'un ajout provisoire à l'ensemble de WD (22) à planifier en commun.

13. Nœud de réseau (16) selon l'une quelconque des revendications 4 à 12, dans lequel le premier WD (22) présente de multiples ports et le seuil de puissance est déterminé sur la base au moins en partie d'une puissance d'un faisceau avec la puissance la plus forte parmi des faisceaux associés à des ports du premier WD (22).

14. Nœud de réseau (16) selon l'une quelconque des revendications 4 à 13, dans lequel chacun de la pluralité de faisceaux est associé à une estimation de canal de signal de référence de sondage, SRS, différente et la puissance d'un faisceau correspondant à un bit est basée au moins en partie sur une estimation de canal SRS correspondante.

15. Nœud de réseau (16) selon l'une quelconque des revendications 4 à 14, dans lequel le nœud de réseau est configuré pour fonctionner selon un protocole de communication à entrées multiples et sorties multiples multiutilisateurs, MU-MIMO.
